# EUROPÄISCHE PATENTANMELDUNG

(11) **EP 1 365 336 A1**
(43) Veröffentlichungstag der Anmeldung: **26.11.2003**
(21) Anmeldenummer: 03008260.6
(22) Anmeldetag: 09.04.2003
(51) Int. Cl.: G06F 17/60

(54) **Produktionsverfahren und Produktionssystem**

(30) Priorität: 24.05.2002 DE 10223297; 12.02.2003 DE 10305731
(71) Anmelder: Sew-Eurodrive GmbH & Co. KG, 76646 Bruchsal (DE)
(72) Erfinder: Pfisterer, Doris, 67660 Betschdorf (FR); Beha, Konrad, 76698 Ubstadt-Weiher (DE); Gult, Wolfgang, 76703 Kraichtal (DE); Horneff, Jürgen, 68519 Viernheim (DE); Kohl, Andreas, 76227 Karlsruhe (DE); Schlichter, Norbert, 76698 Ubstadt-Weiher (DE)

(57) **Zusammenfassung**

Produktionsverfahren und Produktionssystem zur Fertigung von Antrieben, umfassend weltweit verteilt angeordnete Produktionswerke und Montagewerke, wobei die Produktionswerke mindestens zur Fertigung von Teilen des Antriebs dienen, wobei die Montagewerke mindestens zum derartigen Zusammensetzen der Antriebe aus Teilen dienen, dass die Antriebe an die Kunden auslieferbar sind,
und wobei Produktionswerke und Montagewerke jeweils Lager umfassen, in denen die Teile lagerbar sind,
wobei die Montagewerke Bestellungen der Teile an die Produktionswerke übermitteln, wobei Teiletyp ein Gebindetyp zugeordnet ist, bei dem das Gebinde eine jeweilige Gebindeverpackung zur Aufnahme einer jeweiligen Anzahl von Teilen umfasst,
wobei die Teile immer nur als Gebinde oder dessen Vielfaches bestellbar, lieferbar und lagerbar sind,
wobei die Gebindeverpackung mindestens ein Mittel zur Identifizierung umfasst.

## Beschreibung

Die Erfindung betrifft ein Produktionsverfahren und ein Produktionssystem.

Antriebe umfassen Elektromotoren mit oder ohne zugehörige Getriebe. Dabei ist der Elektromotor je nach Ausführung von einem Umrichter versorgbar. Der Antrieb wird aus vielen Einzelteilen gefertigt. Beispielsweise umfasst ein Stirnradgetriebe zumindest Verzahnteile oder Zahnräder und ein Gehäuseteil. Bei der Produktion eines werden zuerst Teile wie Zahnräder oder Gehäuse gefertigt und danach bei der Montage die Teile zum an den Kunden auslieferfähigen Getriebe. Zusammengebaut. Ein Umrichter beinhaltet je nach Kundenwunsch verschiedene Optionen. Bei der Montage wird dem Umrichter diejenige Option eingebaut, damit der Kunde den von ihm gewünschten Umrichter erhält.

Der Erfindung liegt daher die Aufgabe zugrunde, eine weltweite vernetzte Struktur zum Fertigen zu schaffen, die das Fertigen von Antrieben verbessert. Insbesondere soll dies bei gleichzeitiger kostengünstiger Ausführung geschehen.

Erfindungsgemäß wird die Aufgabe bei dem Produktionssystem nach den in Anspruch 1 und bei dem Produktionsverfahren nach den in Anspruch 5 angegebenen Merkmalen gelöst.

Wesentliche Merkmale der Erfindung sind, dass das Produktionssystem weltweit verteilt aufgebaut und angeordnete Produktionswerke und Montagewerke und ein Gebindesystem umfasst, insbesondere zur weltweit verteilt angeordneten Produktion der Teile der Antriebe und zur kundennahen Endmontage der Antriebe und deren reaktionsschnellen Auslieferung,
wobei das Gebindesystem mehrere Gebindetypen umfasst, wobei das zu einem Gebindetyp gehörige jeweilige Gebinde jeweils Mittel zur Identifizierung aufweist und zur Aufnahme von einer jeweiligen, vom Gebindetyp abhängigen Anzahl von Teilen vorgesehen ist,
wobei jedes Produktionswerk mindestens zur Fertigung von einem oder mehreren Teilen des Antriebs vorgesehen ist, wobei von einem einzigen oder sogar mehreren der Produktionswerke nicht alle, für den jeweiligen Antrieb notwendigen Teile herstellbar sind,
wobei die Montagewerke mindestens zum derartigen Zusammensetzen der Antriebe aus Teilen dienen, dass die montierten Antriebe an Kunden zum Einbau und zur Verwendung in Maschinen und/oder Anlagen auslieferbar sind,
wobei das Montagewerk mit einem Produktionswerk zum Austausch von Daten derart verbindbar sind, dass vom Montagewerk aus Bestellungen von Teilen an ein Produktionswerk übermittelbar sind, insbesondere via Internet, Telefon, FAX oder dergleichen,
wobei Produktionswerke und Montagewerke jeweils Lager umfassen, in denen Teile lagerbar sind,
wobei die Lieferungen der bestellten Teile von den Produktionswerken an die bestellenden Montagewerke ausschließlich in Gebinden des Gebindesystems derart vorgesehen sind, dass die Teile immer nur als Gebinde oder dessen Vielfaches
- von den Montagewerken bestellbar,
- von den Produktionswerken lieferbar und
- in den Lagern lagerbar sind,
wobei jedem Typ von Teilen, also Teiletyp, mindestens ein Gebindetyp zugeordnet ist, bei dem das Gebinde eine jeweilige Gebindeverpackung zur Aufnahme einer jeweiligen, vom Gebindetyp abhängigen Anzahl von Teilen umfasst,
wobei die Gebindeverpackung jeweils mindestens ein Mittel zur Identifizierung umfasst.

Wesentlicher Vorteil ist dabei, dass mittels der weltweit verteilt angeordneten Produktion der Teile der Antriebe die Teile immer in demjenigen Standort vermehrt produzierbar sind, in welchem sich zum entsprechenden Zeitpunkt die besten wirtschaftlichen Ergebnisse erzielen lassen. Es sind also an weltweit verschiedenen Standorten, insbesondere in verschiedenen Ländern und/oder Währungsregionen und mit insbesondere verschiedenen Lohnniveaus, mehrere Produktionswerke installiert, deren Produktionsleistung steuerbar ist zur Optimierung des wirtschaftlichen Erfolges des gesamten Systems. Jedes Produktionswerk ist dabei auf die Produktion gewisser Teile spezialisiert, aber nicht unbedingt aller, für den gesamten Antrieb notwendigen. Somit ist das Know-How zur Fertigung des gesamten Antriebs nicht als Ganzes dem jeweiligen politischen und/oder wirtschaftlichen Einfluss ausgesetzt. Durch die Spezialisierung ist eine hohe Zuverlässigkeit und Qualität der jeweils produzierten Teile bewirkt, wobei die jeweiligen besonderen technischen Kenntnisse der Fachleute in der Region des Standortes und die Art der Teile, beispielsweise mechanische oder elektronische Teile, miteinander abstimmbar sind. In einer Region mit Fachleuten auf mechanischem Gebiet werden also vorzugsweise eher mechanische Teile im dortigen Produktionswerk gefertigt. Weiter von Vorteil ist, dass es genügt kostspielige Fertigungsmaschinen nur für eines oder wenige der Produktionswerke zu beschaffen und von dort diejenigen Montagewerke zu beliefern, welche die entsprechenden Teile benötigen.

Die Montagewerke sind vorteiligerweise mit einer geringeren Fertigungstiefe ausstattbar als die Produktionswerke, was zu einer Reduzierung im Bedarf an Fertigungsmaschinen und Spezialisten führt und somit eine kostengünstige Fertigstellung des Antriebs ermöglicht. Die Montagewerke sind vorteiligerweise kundennah platziert. Dies ermöglicht eine reaktionsschnelle Auslieferung, wenn ein Kunde einen Antrieb bestellt hat, da die Lieferwege gering sind.

Weiterer wesentlicher Vorteil bei der Erfindung ist, dass beim Liefern, Lagern, Ausliefern, Bereitstellen und Bestellen immer nur dieselbe Einheit, nämlich das Gebinde, vorgesehen ist. Dieses weist eine Verpackung auf, die sogar zum Schutz geeignet wählbar ist. Somit muss nicht das jeweilige Teil ausgepackt und/oder eingepackt werden sondern es verbleibt nach seiner Herstellung im Produktionswerk bis zum endgültigen Gebrauch im Gebinde, also bis zur Verwendung im Montagewerk. Bei metallischen Teilen ist somit sogar die von Berührungen ausgehende Korrosionsgefahr verringert. Auch dies trägt zur Kostenreduzierung bei der Erfindung bei.

Weitere Vorteile der Gebindeverpackung sind, dass das Einzelteilhandling auf ein Minimum reduziert ist und somit auch Qualitätsverbesserungen erzielbar sind, insbesondere treten auch keine Fehler mehr auf, die beim Stand der Technik beim Einzelteilhandling auftreten, wie beispielsweise fehlerhafte Zuordnungen, fehlerhaftes Abzählen und dergleichen.

Weiter ist vorteilhaft, dass die Anzahl der Vorgänge beim Lagern, Versenden und Bestellen verringert wird. Bei einer weltweit verteilt aufgebauten Produktionsstruktur muss nämlich jedes Werk einen Wareneingang betreiben, um die eingehende Ware zumindest ins Lager korrekt einzuordnen.

Im Gegensatz zum Stand der Technik stellt das erfindungsgemäße Gebinde gleichzeitig eine Verpackungseinheit, Lagereinheit, Bestelleinheit, Verkaufseinheit, Ladeeinheit, Produktionseinheit und Transporteinheit dar. Daraus ergeben sich Kostenvorteile und Qualitätsvorteile für die Antriebe. Außerdem stellt die Transportverpackung gleichzeitig den Lagerbehälter dar. Außerdem verringert sich die Anzahl der Bestellvorgänge, da beim Stand der Technik jedes Teil zu bestellen war. Bei der Erfindung hingegen ist nur ein Gebinde von Teilen bestellbar.

Die weltweit verteilt aufgebaute Struktur hat den Vorteil, dass kundennah Montagewerke vorhanden sind, um die Lieferzeiten möglichst kurz zu halten. Außerdem sind damit auch wirtschaftliche Vorteile, insbesondere währungsbedingt aus finanztechnischer Sicht, vorhanden. Die Montagewerke halten vorteiligerweise gewisse Lagerbestände, um dem Kunden sein individuelles Produkt montieren und ausliefern zu können. Diese Lager der Montagewerke sind mit den die Teile umfassenden Gebinden bestückbar. Bei Bedarf ist Nachschub bei den Produktionswerken bestellbar. Dazu wird bei der Erfindung immer dasjenige Produktionswerk ausgewählt das ein Optimum hinsichtlich mehrerer Parameter, wie Produktionswerk-Auslastung, Lieferzeit, Qualität und/oder Kosten, aufweist. Die Definition dieses Optimums wird vom Verfahren vorgesehen.
Das Produktionswerk hält die Mittel zum Fertigen der Teile vor, wobei diese Fertigungsmittel kostspielig sind und speziell ausgeführt sind für die Fertigung der jeweiligen Teile. Dadurch, dass große Mengen vom Produktionswerk zu produzieren sind, sind Qualität erhöhbar und Kosten absenkbar.

Bei einer bevorzugten Ausführung sind die Mittel zur Identifizierung als Barcode auf der äußeren Oberfläche der Gebindeverpackung ausgeführt sind. Von Vorteil ist dabei, dass die Mittel und/oder der Barcode mit Informationen, wie Auslieferdatum, Stückzahl, Sachnummer

Bei einer bevorzugten Ausführung wird bei Entnahme des letzten Teiles aus dem Gebinde, den Mitteln zur Identifizierung Information entnommen wird, insbesondere mit Mitteln zum Lesen, und diese Information zum Auslösen einer entsprechenden Bestellung verwendet wird. Von Vorteil ist dabei, dass somit immer Nachschub herangeschafft wird während ein weiteres Gebinde zum Entnehmen von Teilen vorsehbar ist, also ein sogenanntes Kanban-System vorsehbar ist und ein Pull-Prinzip-Arbeiten ausführbar ist.

Bei einer bevorzugten Ausführung umfasst das Gebindesystem mehrere Gebindetypen, wobei das zu einem Gebindetyp gehörige Gebinde Mittel zur Identifizierung aufweist und zur Aufnahme von einer jeweiligen, vom Gebindetyp abhängigen Anzahl von Teilen vorgesehen ist. Von Vorteil ist dabei, dass Sachnummer, Stückzahl und Auslieferdatum sowie weitere Informationen dem Gebinde zuordenbar sind und somit das Gebinde in eindeutiger und klarer Weise identifizierbar und nachbestellbar ausgeführt ist.

Bei einer bevorzugten Ausführung besteht die Gebindeverpackung aus einem Äußeren, wie Schachtel oder Kiste, und in dieses Äußere je nach Teiletyp ein Inneres vorsehbar ist, das nur zur Aufnahme der Teile dieses Teiletyps geeignet ist. Von Vorteil ist dabei, dass durch Austausch des Inneren das Gebinde in ein Gebinde eines anderen Gebindetyps umwandelbar ist. Somit sind Lagerkosten und Lagerplatz für das Gebinde einsparbar.

Bei einer bevorzugten Ausführung ist die Gebindeverpackung wiederverwendbar. Von Vorteil ist dabei, dass der Umweltschutz verbessert ist, die Kosten und das Lagervolumen erniedrigt sind.

Bei einer bevorzugten Ausführung ist das Montagewerk mit einem Produktionswerk zum Austausch von Daten derart verbunden, dass vom Montagewerk aus Bestellungen an ein Produktionswerk übermittelbar sind. Von Vorteil ist dabei, dass das Internet verwendbar ist und somit sehr schnell und weltweit die Bestellung an das optimale Produktionswerk übermittelbar ist und dort als Auftrag sofort abarbeitbar ist.

Bei einer bevorzugten Ausführung wird bei Entnahme des letzten Teiles aus dem Gebinde den Mitteln zur Identifizierung Information entnommen, insbesondere mit Mitteln zum Lesen, und diese Information zum Auslösen einer entsprechenden Bestellung verwendet wird. Von Vorteil ist dabei, dass bei Entnahme des letzten Teils die Information über das Gebinde oder deren Teile entnehmbar ist, beispielsweise mit einem Barcodelesegerät, und diese Information elektronisch verarbeitbar und/oder übermittelbar ist an das Produktionswerk. Somit wird das Nachproduzieren der verbrauchten Teile gestartet während ein weiteres Gebinde aufgebraucht wird. In dieser Weise lässt sich der Lagerraum und die Lagermenge reduzieren und es werden somit die Lagerkosten reduziert.

Bei einer bevorzugten Ausführung wird die Bestellung über ein weltweit verbundenes Netz von Rechnersystemen geleitet, insbesondere an ein entsprechendes Produktionswerk. Von Vorteil ist dabei, dass die Bestellung auch von einem Produktionswerk an ein anderes weiterleitbar sind, wenn zum Beispiel Streik oder ein technisches Problem bei der Fertigung besteht. Somit werden die Lieferzeiten optimal eingehalten.

Bei einer bevorzugten Ausführung ist in mehreren Produktionswerken das gleiche Teil bestellbar und die Bestellung wird an dasjenige Produktionswerk geleitet, das optimal liefern kann, wobei das zugehörige Optimum aus Kriterien wie Produktionswerk-Auslastung, Lieferzeit, Qualität und/oder Kosten gebildet ist. Von Vorteil ist dabei, dass das Optimum an die jeweiligen wirtschaftlichen, politischen, finanztechnischen oder weiteren Rahmenbedingungen anpassbar ist.

Bei einer bevorzugten Ausführung wird das Teil nach seiner Herstellung in der Gebindeverpackung gelagert und erst wieder zur Montage, insbesondere direkt an der Montagelinie vom Montierer, entnommen wird, also kein Umlagern des Teiles als solches statt findet. Von Vorteil ist dabei, dass der Korrosionschutz der Teile verbessert wird, da durch Berührungen Oxidationsprozesse, insbesondere bei metallischen Teilen auslösbar sind.

Bei einer bevorzugten Ausführung werden die entleerte Gebindeverpackung oder Teile hiervon an das Produktionswerk zurückgeliefert. Von Vorteil ist dabei, dass die Kosten für die Gebindeverpackung reduzierbar sind und die Umwelt geschützter ist.

Weitere vorteilhafte Ausgestaltungen ergeben sich aus den Unteransprüchen.

### Bezugszeichenliste

- P: Produktionswerk
- M: Montagewerk
- K: Kunde

Die Erfindung wird nun anhand von einer Abbildung näher erläutert:

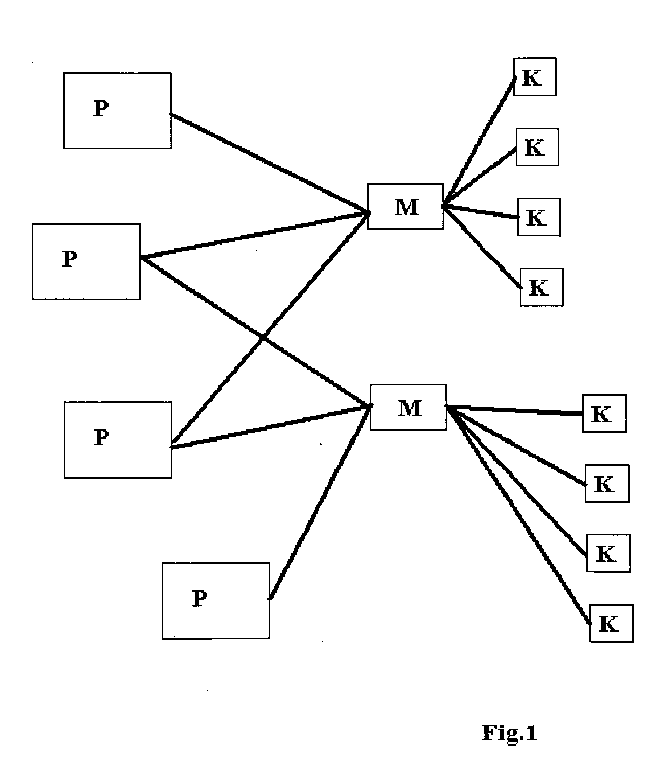

In der Figur 1 sind Produktionswerke P gezeigt, die jeweils gleiche oder verschiedene Teile produzieren. Die Montagewerke M bestellen bei den Ihnen nächst gelegenen Produktionswerken P die Gebinde mit den benötigten Teilen, wenn die Produktionswerke diese herstellen können. Ansonsten werden die Teile bei demjenigen Produktionswerk P bestellt, das in der Lage ist, diese Teile herzustellen. Die Bestellung und Lieferung erfolgt dabei immer in Gebinden.

Statt der Auswahl des Produktionswerkes nach Nähe ist bei einem weiteren erfindungsgemäßen Ausführungsbeispiel das Produktionswerk nach einem Optimum bestimmbar. Das Optimum wird dabei nach Werten, wie Produktionswerk-Auslastung, Lieferzeit, Qualität und/oder Kosten, gebildet, wobei die Werte gewichtet werden können und die Wichtungsfaktoren einstellbar sind, insbesondere für jedes Montagwerk separat. Das Verfahren zur Steuerung dieser weltweiten Produktion ist in einem über Internet und/oder weitere Datenleitungen verbundenen weltweit verteiltem Rechnernetz implementiert. Dabei befinden sich jeweils Teile des zugehörigen Programms in den Produktionswerken und in den Montagewerken.

Das Verfahren und das Programm erlauben nur die Bestellung der Teile in Gebindeeinheiten. Somit ist gesichert, dass vom Produktionswerk immer ein Gebinde oder ein Vielfaches von Gebinden ausgeliefert wird an das Montagewerk. Nach Beendigung der Produktion des Teiles wird dieses in die Gebindeverpackung eingelagert, wobei die Gebindeverpackung ein Äußeres und ein Inneres aufweist. Das Innere ist dabei derart gestaltet, insbesondere aus Kunststoff, dass eine gewisse festegelegte Anzahl der Teile einlagerbar ist. Außerdem stellt das Innere transportsichere Aufnahmen der Teile zur Verfügung, wodurch die Transportschäden verringerbar sind.

Das mit Teilen befüllte Gebinde wird an das Montagewerk geliefert. Erst dort wird direkt bei der Montage des Antriebs das entsprechend benötigte Teil der Gebindeverpackung entnommen. Dadurch wird ein Umpacken oder Umlagern verhindert und das Gebinde stellt somit Schutz bei Transport und Lagerung dar sowie Lagerbehälter und Transportbehältnis.

Der Antrieb wird im Montagewerk aus den Teilen zusammengesetzt. Bei der Entnahme des letzten Teiles aus der Gebindeverpackung wird mit einem Barcodeleser der Barcode des Gebindes ausgelesen und eine elektronische Bestellung beim optimalen Produktionswerk ausgelöst. Dabei wird die Bestellung über die Rechner des Montagewerkes und des Internets bis zu den Rechners des Produktionswerks übertragen. Falls jedoch bei diesem optimalen Produktionswerk ein technisches oder wirtschaftliches Problem vorliegt, wird die Bestellung weitergeleitet an ein anderes Produktionswerk, das in der Lage ist, die Teile ebenfalls zu produzieren und an das Montagewerk zu liefern.

Der Kunde wird von den nächstgelegenen Montagewerken beliefert, die die Antriebe aus den Teilen nach Kundenwunsch zusammensetzen. Somit ist der Kunde schnell belieferbar.

Unter Teilen sind bei Getrieben mindestens Gehäuse, Verzahnungsteile, Lager und Wellen zu verstehen, bei Motoren mindestens Rotoren, Lager und Statoren samt Gehäuse und bei Umrichtern mindestens Optionskarten, Gehäuse, Signal- und Leistungskomponenten.

Dem Fachmann ist klar, dass je nach Stückzahlspektrum des gesamten Angebots eines weltweit aufgebauten Konzerns die vorliegende Erfindung auch mit nach Stand der Technik bestehenden Produktionsstrukturen gemischt vorteilhaft ausführbar sind. Wenn der Konzern also eine Großproduktion von Antrieben ersten Typs und Einzelproduktion von Antrieben zweiten Typs anbietet, ist es sinnvoll, die vorliegende Erfindung auf die Großproduktion anzuwenden nicht aber unbedingt auf die Einzelproduktion.

## Patentansprüche

1. Produktionssystem zur Fertigung von Antrieben,
umfassend weltweit verteilt angeordnete Produktionswerke und Montagewerke und ein Gebindesystem, insbesondere zur weltweit verteilt angeordneten Produktion der Teile der Antriebe und zur kundennahen Endmontage der Antriebe und deren reaktionsschnellen Auslieferung,
wobei das Gebindesystem mehrere Gebindetypen umfasst, wobei das zu einem Gebindetyp gehörige jeweilige Gebinde jeweils Mittel zur Identifizierung aufweist und zur Aufnahme von einer jeweiligen, vom Gebindetyp abhängigen Anzahl von Teilen vorgesehen ist,
wobei jedes Produktionswerk mindestens zur Fertigung von einem oder mehreren Teilen des Antriebs vorgesehen ist, wobei von einem einzigen oder sogar mehreren der Produktionswerke nicht alle, für den jeweiligen Antrieb notwendigen Teile herstellbar sind,
wobei die Montagewerke mindestens zum derartigen Zusammensetzen der Antriebe aus Teilen dienen, dass die montierten Antriebe an Kunden zum Einbau und zur Verwendung in Maschinen und/oder Anlagen auslieferbar sind,
wobei das Montagewerk mit einem Produktionswerk zum Austausch von Daten derart verbindbar sind, dass vom Montagewerk aus Bestellungen von Teilen an ein Produktionswerk übermittelbar sind, insbesondere via Internet, Telefon, FAX oder dergleichen,
wobei Produktionswerke und Montagewerke jeweils Lager umfassen, in denen Teile lagerbar sind,
wobei die Lieferungen der bestellten Teile von den Produktionswerken an die bestellenden Montagewerke ausschließlich in Gebinden des Gebindesystems derart vorgesehen sind, dass die Teile immer nur als Gebinde oder dessen Vielfaches
- von den Montagewerken bestellbar,
- von den Produktionswerken lieferbar und
- in den Lagern lagerbar sind,
wobei jedem Typ von Teilen, also Teiletyp, mindestens ein Gebindetyp zugeordnet ist, bei dem das Gebinde eine jeweilige Gebindeverpackung zur Aufnahme einer jeweiligen, vom Gebindetyp abhängigen Anzahl von Teilen umfasst,
wobei die Gebindeverpackung jeweils mindestens ein Mittel zur Identifizierung umfasst.

2. Produktionssystem nach mindestens einem der vorangegangenen Ansprüche,
**dadurch gekennzeichnet, dass**
die Mittel zur Identifizierung als Barcode auf der äußeren Oberfläche der Gebindeverpackung ausgeführt sind.

3. Produktionssystem nach mindestens einem der vorangegangenen Ansprüche,
**dadurch gekennzeichnet, dass**
die Gebindeverpackung aus einem Äußeren besteht, wie Schachtel oder Kiste, und in dieses Äußere je nach Teiletyp ein Inneres vorsehbar ist, das nur zur Aufnahme der Teile dieses Teiletyps geeignet ist.

4. Produktionssystem nach mindestens einem der vorangegangenen Ansprüche,
**dadurch gekennzeichnet, dass**
die Gebindeverpackung derart ausgeführt ist, dass sie wiederverwendbar ist.

5. Produktionsverfahren für ein Produktionssystem nach mindestens einem der vorangegangenen Ansprüche,
umfassend weltweit verteilt angeordnete Produktionswerke und Montagewerke,
wobei in den Produktionswerken mindestens Teile des Antriebs gefertigt werden,
wobei in den Montagewerke mindestens Antriebe aus Teilen derart zusammengesetzt werden, dass die Antriebe an die Kunden auslieferbar sind,
und wobei Produktionswerke und Montagewerke jeweils Lager umfassen, in denen die Teile gelagert werden,
wobei Bestellungen der Teile von den Montagewerken an die Produktionswerke übermittelt werden,
wobei jedem Teiletyp ein Gebindetyp zugeordnet ist, bei dem das Gebinde eine jeweilige Gebindeverpackung zur Aufnahme einer jeweiligen Anzahl von Teilen umfasst,
wobei die Teile immer nur als Gebinde oder dessen Vielfaches bestellt werden, geliefert und gelagert werden,
wobei die Gebindeverpackung mindestens ein Mittel zur Identifizierung umfasst.

6. Produktionsverfahren nach mindestens einem der vorangegangenen Ansprüche,
**dadurch gekennzeichnet, dass**
bei Entnahme des letzten Teiles aus dem Gebinde, den Mitteln zur Identifizierung Information entnommen wird, insbesondere mit Mitteln zum Lesen, und diese Information zum Auslösen einer entsprechenden Bestellung verwendet wird.

7. Produktionsverfahren nach mindestens einem der vorangegangenen Ansprüche,
**dadurch gekennzeichnet, dass**
die Bestellung über ein weltweit verbundenes Netz von Rechnersystemen geleitet wird, insbesondere an ein entsprechendes Produktionswerk.

8. Produktionsverfahren nach mindestens einem der vorangegangenen Ansprüche,
**dadurch gekennzeichnet, dass**
in mehreren Produktionswerken das gleiche Teil bestellbar ist und die Bestellung an dasjenige Produktionswerk geleitet wird, das optimal liefern kann, wobei das zugehörige Optimum aus Kriterien, wie Produktionswerk-Auslastung, Lieferzeit, Qualität und/oder Kosten, gebildet ist.

9. Produktionsverfahren nach mindestens einem der vorangegangenen Ansprüche,
**dadurch gekennzeichnet, dass**
das Teil nach seiner Herstellung in der Gebindeverpackung gelagert wird und erst wieder zur Montage, insbesondere direkt an der Montagelinie vom Montierer, entnommen wird, also kein Umlagern des Teiles als solches statt findet.

10. Produktionsverfahren nach mindestens einem der vorangegangenen Ansprüche,
**dadurch gekennzeichnet, dass**
die entleerte Gebindeverpackung oder Teile hiervon an das Produktionswerk zurückgeliefert wird.

## Geänderte Patentansprüche

### Geänderte Patentansprüche gemäss Regel 86(2) EPÜ.

**1.** Gebindesystem für ein Produktionssystem zur Fertigung von Antrieben, das weltweit verteilt angeordnete **Produktionswerke** und **Montagewerke und das Gebindesystem umfasst**, insbesondere zur weltweit verteilt angeordneten Produktion der Teile der Antriebe und zur kundennahen Endmontage der Antriebe und deren reaktionsschnellen Auslieferung,
wobei das **Gebindesystem** mehrere Gebindetypen umfasst, wobei das zu einem Gebindetyp gehörige jeweilige Gebinde jeweils Mittel zur Identifizierung aufweist und zur Aufnahme von einer jeweiligen, vom Gebindetyp abhängigen Anzahl von Teilen vorgesehen ist,
wobei jedes **Produktionswerk** mindestens zur Fertigung von einem oder mehreren Teilen des Antriebs vorgesehen ist, wobei von einem einzigen oder sogar mehreren der Produktionswerke nicht alle, für den jeweiligen Antrieb notwendigen Teile herstellbar sind,
wobei die **Montagewerke** mindestens zum derartigen Zusammensetzen der Antriebe aus Teilen dienen, dass die montierten Antriebe an Kunden zum Einbau und zur Verwendung in Maschinen und/oder Anlagen auslieferbar sind,
wobei das Montagewerk mit einem Produktionswerk zum Austausch von Daten derart verbindbar sind, dass vom Montagewerk aus Bestellungen von Teilen an ein Produktionswerk übermittelbar sind, insbesondere via Internet, Telefon, FAX oder dergleichen,
wobei Produktionswerke und Montagewerke jeweils Lager umfassen, in denen Teile lagerbar sind,
wobei die Lieferungen der bestellten Teile von den Produktionswerken an die bestellenden Montagewerke ausschließlich in Gebinden des Gebindesystems derart vorgesehen sind, dass die Teile immer nur als Gebinde oder dessen Vielfaches
- von den Montagewerken bestellbar,
- von den Produktionswerken lieferbar und
- in den Lagern lagerbar sind,
wobei jedem Typ von Teilen, also Teiletyp, mindestens ein Gebindetyp zugeordnet ist, bei dem das Gebinde eine jeweilige Gebindeverpackung zur Aufnahme einer jeweiligen, vom Gebindetyp abhängigen Anzahl von Teilen umfasst,
wobei die Gebindeverpackung jeweils mindestens ein Mittel zur Identifizierung umfasst
wobei die Mittel zur Identifizierung als Barcode auf der äußeren Oberfläche der Gebindeverpackung ausgeführt sind.

**2.** Gebindesystem nach mindestens einem der vorangegangenen Ansprüche,
**dadurch gekennzeichnet, dass**
die Gebindeverpackung aus einem Äußeren besteht, wie Schachtel oder Kiste, und in dieses Äußere je nach Teiletyp ein Inneres vorsehbar ist, das nur zur Aufnahme der Teile dieses Teiletyps geeignet ist.

**3.** Gebindesystem nach mindestens einem der vorangegangenen Ansprüche,
**dadurch gekennzeichnet, dass**
die Gebindeverpackung derart ausgeführt ist, dass sie wiederverwendbar ist.

**4.** Produktionsverfahren für ein Gebindesystem nach mindestens einem der vorangegangenen Ansprüche,
umfassend weltweit verteilt angeordnete Produktionswerke und Montagewerke,
wobei in den Produktionswerken mindestens Teile des Antriebs gefertigt werden,
wobei in den Montagewerke mindestens Antriebe aus Teilen derart zusammengesetzt werden, dass die Antriebe an die Kunden auslieferbar sind,
und wobei Produktionswerke und Montagewerke jeweils Lager umfassen, in denen die Teile gelagert werden,
wobei Bestellungen der Teile von den Montagewerken an die Produktionswerke übermittelt werden,
wobei jedem Teiletyp ein Gebindetyp zugeordnet ist, bei dem das Gebinde eine jeweilige Gebindeverpackung zur Aufnahme einer jeweiligen Anzahl von Teilen umfasst,
wobei die Teile immer nur als Gebinde oder dessen Vielfaches bestellt werden, geliefert und gelagert werden,
wobei die Gebindeverpackung mindestens ein Mittel zur Identifizierung umfasst.

**5.** Produktionsverfahren nach mindestens einem der vorangegangenen Ansprüche,
**dadurch gekennzeichnet, dass**
bei Entnahme des letzten Teiles aus dem Gebinde, den Mitteln zur Identifizierung Information entnommen wird, insbesondere mit Mitteln zum Lesen, und diese Information zum Auslösen einer entsprechenden Bestellung verwendet wird.

**6.** Produktionsverfahren nach mindestens einem der vorangegangenen Ansprüche,
**dadurch gekennzeichnet, dass**
die Bestellung über ein weltweit verbundenes Netz von Rechnersystemen geleitet wird, insbesondere an ein entsprechendes Produktionswerk.

**7.** Produktionsverfahren nach mindestens einem der vorangegangenen Ansprüche,
**dadurch gekennzeichnet, dass**
in mehreren Produktionswerken das gleiche Teil bestellbar ist und die Bestellung an dasjenige Produktionswerk geleitet wird, das optimal liefern kann, wobei das zugehörige Optimum aus Kriterien, wie Produktionswerk-Auslastung, Lieferzeit, Qualität und/oder Kosten, gebildet ist.

**8.** Produktionsverfahren nach mindestens einem der vorangegangenen Ansprüche,
**dadurch gekennzeichnet, dass**
das Teil nach seiner Herstellung in der Gebindeverpackung gelagert wird und erst wieder zur Montage, insbesondere direkt an der Montagelinie vom Montierer, entnommen wird, also kein Umlagern des Teiles als solches statt findet.

**9.** Produktionsverfahren nach mindestens einem der vorangegangenen Ansprüche,
**dadurch gekennzeichnet, dass**
die entleerte Gebindeverpackung oder Teile hiervon an das Produktionswerk zurückgeliefert wird.
